# EUROPÄISCHE PATENTSCHRIFT

(11) **EP 3 966 458 B1**
(45) Veröffentlichungstag und Bekanntmachung des Hinweises auf die Patenterteilung: **26.07.2023**
(21) Anmeldenummer: 20725124.0
(22) Anmeldetag: 05.05.2020
(51) Int. Cl.: F15B 21/0423, F15B 21/04, F15B 7/00

(54) **MOTORKÜHLUNG VIA HYDRAULIKFLUID**
MOTOR COOLING VIA HYDRAULIC FLUID
REFROIDISSEMENT DE MOTEUR PAR UN FLUIDE HYDRAULIQUE

(30) Priorität: 08.05.2019 DE 102019112022
(43) Veröffentlichungstag der Anmeldung: 16.03.2022
(73) Patentinhaber: MOOG GmbH, 71034 Böblingen (DE)
(72) Erfinder: HÄNDLE, Werner, 71672 Marbach a. N. (DE); HELBIG, Achim, 70184 Stuttgart (DE)
(74) Vertreter: Wittmann, Ernst-Ulrich
(86) Internationale Anmeldenummer: PCT/EP2020/062431
(87) Internationale Veröffentlichungsnummer: WO 2020/225253

(56) Entgegenhaltungen:
- WO-A1-2012/091942
- WO-A2-2009/102740
- DE-A1-102007 053 263
- US-B2- 8 341 956

## Beschreibung

Die vorliegende Erfindung betrifft ein Hydrauliksystem zum Antrieb eines Aktuators und insbesondere ein Hydrauliksystem zum Antrieb eines Aktuators mit einer alternativen Art der Motorkühlung.

Um eine Volumenstrom in einem Hydrauliksystem bereitzustellen, wird im Stand der Technik üblicherweise eine von einem Elektromotor angetriebene Hydromaschine verwendet Der kontinuierliche Betrieb des Elektromotors führt zu seiner Erwärmung bzw. Erhitzung und dementsprechend muss der Elektromotor gekühlt werden, um Schäden - welche mit einer Überlastung eines Motors verbunden sein kann - zu vermeiden.

Im Stand der Technik gibt es eine Vielzahl an unterschiedlichen Möglichkeiten eine Kühlung für einen Elektromotor bereitzustellen. Üblicherweise, weißt das Hydrauliksystem ein Kühlkreislauf auf, welches um das Gehäuse des Elektromotors angeordnet ist. Der

Kühlkreislauf ist dabei ein selbständiger Kreislauf, welches gemäß dem Stand der Technik unabhängig von den weiteren Kreisläufen im Hydrauliksystem bzgl. Druck, Volumen etc. gesteuert werden kann.

Ferner wird im Stand der Technik zur Kühlung des Elektromotors oftmals Wasser verwendet.

Da jedoch herkömmlichen Elektromotoren ein Gehäuse aus Aluminium aufweisen, entstand oft Korrosion im Gehäuse. Folglich mussten die Gehäuse der Elektromotor aus einem rostfreiem Stahl hergestellt werden, was jedoch zu höheren Kosten sowie zu einem höheren Gewicht des Elektromotors führt.

Alternativ wird in den Kühlkreisläufen des Stand der Technik ein Kühlmittel verwendet, welches aber auch teuer ist Weiterhin muss die strikte Trennung des Kühlkreislaufs von den weiteren Kreisläufen des Hydrauliksystems gewährleistet sein, da eine Vermischung des Kühlmittels mit dem Hydraulikfluid, im Betrieb des Hydrauliksystems unbedingt vermieden werden muss.

Ein eigenständiger und unabhängiger Kühlkreislauf benötigt ein eigenes Steuersystem und dementsprechend eine erhöhte Anzahl an Vorrichtungen. Insbesondere muss ein Volumenstrom des Kühlmittels im Kühlkreislauf bereitgestellt werden, wodurch üblicherweise weitere Pumpeneinheiten mit zumindest einem Motor in oder an dem Kühlkreislauf angeordnet werden müssen.

DE 10 2007 053263 A1, WO 2009/102740 A2, US 8 341 956 B2 und WO 2012/091942 A1 offenbaren bekannte Hydrauliksysteme.

Es ist daher Aufgabe der vorliegenden Anmeldung eine alternative Motorkühlung bereitzustellen, bei welcher die Nachteile des Stands der Technik zumindest teilweise vermieden werden.

Diese und weitere Aufgaben werden durch ein Hydrauliksystem gemäß dem unabhängigen Anspruch 1 gelöst. Bevorzugte Ausführungsformen und Weiterbildungen des erfindungsgemäßen Hydrauliksystems sind Gegenstand der abhängigen Ansprüche.

Das erfindungsgemäße Hydrauliksystem, umfasst einen Hydraulikkreislauf, wobei der Hydraulikkreislauf einen Niederdruckbereich und einen Hochdruckbereich aufweist; eine von einem ersten Elektromotor angetriebene volumen- und/oder drehzahl-variable Hydromaschine (11) aufweisend einen Einlass und einen Auslass zum Bereitstellen eines Volumenstromes eines Hydraulikfluides im Hochdruckbereich des Hydraulikkreislaufs und ferner aufweisend einen weiteren Anschluss an dem Gehäuse der Hydromaschine zur Verbindung mit einem Zulauf.

Weiterhin umfasst das erfindungsgemäße Hydrauliksystem mindestens eine bewegbare Achse, welche an dem Hochdruckbereich des Hydraulikkreislaufs angeordnet ist; mindestens ein Ventil, welches den Hochdruckbereich von dem Niederdruckbereich trennt und mindestens einen Hydraulikfluidbehälter, welcher mit dem Niederdruckbereich des Hydraulikkreislaufs hydraulisch verbunden ist.

Das erfindungsgemäße Hydrauliksystem weist weiterhin eine Ableitung auf, welche Hydraulikfluid aus der Leckage der Hydromaschine abführt und eine Kühlleitung, zum Transport des Hydraulikfluid zur Kühlung des Elektromotors, wobei die Ableitung und die Kühlleitung mit mindestens einem der Hydraulikfluidbehälter fluidverbunden sind. Erfindungsgemäß wird dementsprechend ein Hydrauliksystem zum Betreiben einer Achse bereitgestellt, welches sowohl einen Niederdruckbereich, als auch einen Hochdruckbereich aufweist, wobei die wenigstens eine Achse im Hochdruckbereich angeordnet ist. Um einen Volumenstrom im Hochdruckbereich und somit für den Betrieb der Achse bereitzustellen, wird eine von einem Elektromotor betriebene Hydromaschine verwendet Elektromotoren, wie sie in dem erfindungsgemäßen Hydrauliksystem verwendet werden sind im Stand der Technik bekannt und dienen zum Antrieb der Hydromaschine.

Die Hydromaschine ist volumen- und/oder drehzahl-variabel und kann vorzugsweise im Betrieb zwei Flussrichtungen des Hydraulikfluids im Hydraulikkreislauf bereitstellen. Die Hydromaschine kann ferner entweder einen drehzahl-variablen Elektromotor und eine Konstantpumpe oder einen drehzahl-konstanten Elektromotor und eine Verstellpumpe oder einen drehzahl-variablen Elektromotor und eine Verstellpumpe aufweisen. Die Auswahl der Hydromaschine wird dabei von Faktoren wie z.B. Systemkosten, Wirkungsgrad, Zuverlässigkeit, zugelassene Geräuschemission oder Wirkungsgrad bestimmt

Der Niederdruckbereich weist ein vorgespanntes Hydraulikfluid mit einem Druck auf, welcher zwischen dem Umgebungsdruck (Normalduruck 1,013 bar) und 50 bar liegt. Vorteilhaft ist dabei, wenn das Hydraulikfluid im Niederdruckbereich einen Druck von zwischen 0.5 bar und 40 bar, insbesondere von zwischen 1 bar und 30 bar, und besonders bevorzugt zwischen 10 bar und 25 bar aufweist.

Gemäß einer erfindungsgemäßen Ausführungsform kann das Hydraulikfluid dementsprechend im Niederdruckbereich einen erhöhten Druck (>20 bar), aber unter 50 bar, oder einen niedrigeren Druck (<20 bar) aufweisen. Das Hydraulikfluid im Hochdruckbereich kann hingegen einen Druck von bis zu 200 bar aufweisen und liegt immer über dem Durchniveau des Niederdruckbereichs.

Die Achse des erfindungsgemäßen Hydrauliksystems ist längsbeweglich und weist mindestens eine Kammer auf. Die Bewegung der Achse d.h. vorzugsweise eines Hydraulikkolbens wird mittels des in wenigstens eine Kammer(n) der Achse ein- bzw. austretendes Hydraulikfluid und dem damit verbundenen Druckauf- oder Druckabbau bereitgestellt Die Achse ist in dem Hochdruckbereich des Hydraulikkreislaufs angeordnet und mit diesem hydraulisch verbunden.

Die Achse kann erfindungsgemäß ein Hydraulikzylinder, ein Differentialzylinder, ein Teleskopzylinder, ein Mehrgangzylinder, eine Kombination hiervon oder dergleichen sein. Weiterhin können auch zwei, drei oder mehrere Achsen Teil des Hydrauliksystems sein.

Die Trennung des Hochdruckbereichs mit dem Niederdruckbereich wird mittels mindestens einem Ventil bereitgestellt. Ferner ist im Niederdruckbereich mindestens ein Hydraulikfluidbehälter angeordnet, welcher mit dem Niederdruckbereich des Hydraulikkreislaufs hydraulisch verbunden ist

Gemäß einer erfindungsgemäßen Ausführungsform ist das mindestens eine Ventil ein Rückschlagventil, insbesondere ein gesteuertes Rückschlagventil. Die Steuerung des Ventils kann dabei entweder elektrisch oder hydraulisch erfolgen.

Der mindestens eine Hydraulikfluidbehälter kann die Vorspannung des Systems und insbesondere die Vorspannung des Niederdruckbereichs bereitstellen. Der Hydraulikfluidbehälter kann zum Beispiel ein Druckspeicher sein, welcher ein Hydraulikfluid aufweist, das mit einem Druck beaufschlagt ist Der Druck des Hydraulikfluid im Druckspeicher ist im Wesentlichen der Druck, welches das Hydraulikfluid in den Leitungen des Niederdruckbereichs aufweist.

Ferner kann der Hydraulikfluidbehälter auch ein Druckspeicher mit variablen Volumen sein, wodurch ein Druckaufbau und somit eine Vorspannung des Niederdruckbereichs des Hydrauliksystems geregelt und gesteuert werden kann.

Weiterhin weist das erfindungsgemäße Hydrauliksystem eine Ableitung auf, welche Hydraulikfluid aus der Leckage der Hydromaschine abführt und eine Kühlleitung, durch welche Hydraulikfluid - welches zur Kühlung der Hydromaschine dient - strömt. Erfindungsgemäß ist sowohl die Ableitung, als auch die Kühlleitung mit mindestens einem der Hydraulikfluidbehälter fluidverbunden.

Die Leckage einer Hydraulikpumpe ist ein Volumenstrom, welcher trotz der vorhandenen Dichtungen aus den Druckbereichen der Pumpe austritt, ohne Nutzarbeit zu leisten. Die Größe des Leckstroms ist neben geometrischen Größen der Leckstelle abhängig von der Druckdifferenz zwischen dem Druckraum und dessen Umgebung, sowie von der Viskosität des austretenden Mediums und dessen Temperatur.

Üblicherweise werden diese Leckströme vernachlässigt, wobei die Leckage verloren geht oder aufgesammelt und anderweitig verwendet Gegebenenfalls kann die Leckage auch mittels einer zusätzlichen Pumpeneinheit in das Hydrauliksystem wieder eingespeist werden.

Das erfindungsgemäße Hydrauliksystem weist eine Ableitung auf, welche an der Hydromaschine angeordnet ist und welche die durch den Betrieb der Hydromaschine entstandene Leckage bzw. den Leckagestrom weiterleitet

Ferner ist in dem erfindungsgemäßen Hydrauliksystem eine Kühlleitung angeordnet. Diese dient insbesondere zur Kühlung des Elektromotors und verläuft vorzugsweise im und/oder am Gehäuse des Elektromotors und kühlt diesen.

Erfindungsgemäß ist die Ableitung und die Kühlleitung mit mindestens einem der Hydraulikfluidbehälter fluidverbunden. Das heißt insbesondere, dass die Ableitung und die Kühlleitung mit dem Niederdruckbereich fluidverbunden sind.

In der vorliegenden Erfindung wird unter dem Begriff "fluidverbunden" eine Verbindung verstanden, durch welche Fluid insbesondere ein Hydraulikfluid fließen kann. Insbesondere heißt "fluidverbunden", dass die Verbindung nicht zwingend direkt ist, sondern auch weitere Vorrichtungen zwischengeschalten sein können. Wenn zum Beispiel offenbart wird, dass "Vorrichtung A mit Vorrichtung B fluidverbunden ist" heißt dies, dass Fluid von A nach B strömen kann, wobei auch weitere Vorrichtungen wie zum Beispiel weitere Ventile, durch welche das Hydraulikfluid strömen kann, zwischen der Vorrichtung A und der Vorrichtung B angeordnet sein können.

Gemäß einer erfindungsgemäßen Ausführungsform sind die Ableitung und die Kühlleitung in Reihe oder parallel mit mindestens einem der Hydraulikfluidbehälter fluidverbunden.

Beide Alternativen sind Vorteilhaft für das erfindungsgemäße Hydrauliksystem. Sind die Ableitung und die Kühlleitung in Reihe mit dem Hydraulikfluidbehälter verbunden, so wird das Hydraulikfluid aus der Leckage vorzugsweise als Kühlflüssigkeit für den Motor verwendet.

Insbesondere fließt das Hydraulikfluid aus der Leckage über die Ableitung in die Kühlleitung des Elektromotors und somit im und/oder am Gehäuse des Elektromotors, wodurch dieser gekühlt wird.

Gemäß einer bevorzugten Ausführungsform erfolgt die Strömung des Hydraulikfluid aus der Leckage durch den Leckagedruck des Hydraulikfluids. Insbesondere ändert sich der Druck der Leckage proportional mit dem Druck mit dem die Hydromaschine arbeitet Der Druck der Leckage ist aber stets höher als der Druck des Niederdruckbereichs.

Diese Ausführungsform ist kostensparend, da das Hydraulikfluid aus der Leckage nicht nur in das Hydrauliksystem zurück geführt wird, sondern auch als Kühlflüssigkeit verwendet wird. Somit wird kein eigenes Kühlmittel für die Kühlung des Elektromotors benötig, wodurch Materialkosten und Kühlmittelkosten gespart werden. Weiterhin vermindert dies die Wartungsarbeiten und den Aufwand des gesamten Hydrauliksystems.

Sind die Ableitung und die Kühlleitung parallel angeordnet, wird das Leckagefluid wiederverwendet, was auch zu Kostenersparnisse führt. Da die Kühlleitung mit dem Niederruckbereich fluidverbunden ist, wird auch in dieser erfindungsgemäßen Ausführungsform Hydraulikfluid anstatt Kühlflüssigkeit zur Kühlung des Elektromotors verwendet.

Erfindungsgemäß ist die Hydromaschine durch den weiteren Anschluss über den Zulauf mit dem Hydraulikkreislauf im Niederdruckbereich hydraulisch verbunden. Erfindungsgemäß ist der Zulauf über den weiteren Anschluss an dem Gehäuse der Hydromaschine mit dem Leckagebereich der Hydromaschine verbunden, wobei der Leckagebereich mit der Ableitung in Reihe hydraulisch verbunden ist.

Weiterhin kann auch der Zulauf mit der Kühlleitung hydraulisch verbunden sein.

Gemäß einer weiteren erfindungsgemäßen Ausführungsform ist im Zulauf der Ableitung und/oder der Kühlleitung eine zweite von einem Elektromotor angetriebene volumen- und/oder drehzahl-variablen Hydromaschine angeordnet

Die Verbindung des Zulaufs mit der Ableitung und gegebenenfalls mit der Kühlleitung verbessert die Strömung der Leckage und/oder des Hydraulikfluid in der Kühlleitung. Insbesondere wird die Steuerung der Strömung in der Ableitung und/oder Kühlleitung durch die Verwendung einer weiteren Hydromaschine verbessert, so dass gemäß einer weiteren erfindungsgemäßen Ausführungsform die zweite Hydromaschine die Hydraulikfluidströmung in Abhängigkeit der Temperatur und/oder der Last des Elektromotors steuert

Beispielsweise könnten Sensoren am Gehäuse des Elektromotors angeschlossen sein, welche die Temperatur des Elektromotors messen und an einer Steuerungseinheit weiterleiten. Die Steuerungseinheit kann folglich in Abhängigkeit der gemessenen Temperatur die Strömung des Hydraulikfluid in der Leckage und/oder Kühlleitung über den zweiten Elektromotor regeln oder steueren. Weiterhin ist es möglich, dass die Steuereinheit die Strömung des Hydraulikfluid in Abhängigkeit einer gemessenen Last am Elektromotor steuert oder regelt. Weiterhin ist gemäß einer weiteren erfindungsgemäßen Ausführungsform des Hydrauliksystems an dem Zulauf der Ableitung und/oder der Kühlleitung eine Drossel angeordnet.

Sind die Ableitung und die Kühlleitung parallel zueinander angeordnet und ist eine Drossel sowohl an dem Zulauf der Ableitung, als auch auf dem Zulauf der Kühlleitung angeordnet, so kann mittels den Drosseln der Volumenstrom und die Geschwindigkeit der Strömung in der Ableitung und Kühlleitung gesteuert werden. Insbesondere kann damit gesteuert werden, welche der beiden Leitungen (Ableitung und/oder Kühlleitung) einen höheren Volumenstrom benötigen. Wird der Elektromotor zu warm, kann beispielsweise mit der Drossel die Strömung durch die Ableitung verringert werden und damit die Strömung durch die Kühlleitung vergrößert werden.

Gemäß einer weiteren erfindungsgemäßen Ausführungsform ist ein Hydraulikfluidbehälter in dem Niederdruckbereich angeordnet In dieser Ausführungsform wird davon ausgegangen, dass nur ein Hydraulikfluidbehälter im Hydrauliksystem angeordnet ist. Weiterhin kann der eine Hydraulikfluidbehälter gemäß einer weiteren erfindungsgemäßen Ausführungsform ein geschlossener Behälter, insbesondere ein Druckspeicher sein. Dabei ist der Druck des Hydraulikfluid im Druckspeicher vergleichbar mit dem Druck des Hydraulikfluid im Niederdruckbereich des Hydraulikkreislaufs. Insbesondere dient der Druckspeicher der Vorspannung des Hydraulikfluid im Niederdruckbereich.

Gemäß einer weiteren erfindungsgemäßen Ausführungsform weist das Hydrauliksystem einen weiteren Hydraulikfluidbehälter auf, welcher auch in dem Niederdruckbereich angeordnet ist. Somit kann gemäß einer weiteren Ausführungsform der erste Hydraulikfluidbehälter ein geschlossener Behälter, insbesondere ein Druckspeicher sein - wie oben erwähnt - und der weitere Hydraulikfluidbehälter ein druckloser, insbesondere offener Behälter sein.

Mit dem Begriff "drucklos", ist im Folgendem ein Umgebungsdruck gemeint, welcher üblicherweise circa 1 bar (1,013 bar) beträgt.

Da der Druck des Hydraulikfluid im offenen Behälter niedriger ist als der Druck des Hydraulikfluid im Niederdruckbereich, kann gemäß einer weiteren erfindungsgemäßen Ausführungsform zwischen dem Niederdruckbereich des Hydraulikkreislaufes und den weiteren Hydraulikfluidbehälter, noch eine weitere Hydromaschine angeordnet sein. Diese dient der Einspeisung von Hydraulikfluid in den Niederdruckbereich aus dem weiteren Hydraulikfluidbehälter bzw. aus dem offenen Tank.

Durch die Verwendung eines offenen Tanks als zweiten Hydraulikfluidbehälter wird eine Kühlung des in dem Tank befindlichen Hydraulikfluid bereitstellt.

Somit sind gemäß einer weiteren erfindungsgemäßen Ausführungsform die Ableitung und die Kühlleitung, mit dem zweiten Hydraulikfluidbehälter fluidverbunden. Dementsprechend sind die Ableitung und die Kühlleitung über dem Zulauf mit dem Niederdruckbereich des Hydraulikkreislaufs und dem ersten geschlossenen Behälter, also mit dem ersten Hydraulikfluidbehälter, fluidverbunden und gleichzeitig mit dem weiteren zweiten offenen Hydraulikfluidbehälter fluidverbunden.

Folglich wird in dieser erfindungsgemäßen Ausführungsform das Hydraulikfluid aus der Leckage und aus der Kühlleitung in den weiteren Hydraulikfluidbehälter, insbesondere in den offenen Tank geleitet Aus dem weiteren Hydraulikfluidbehälter, wird das gekühlte Hydraulikfluid mittels der weiteren Hydromaschine wieder in den Leitungen des Niederdruckbereichs eingespeist

Weiterhin sind gemäß einer weiteren erfindungsgemäßen Ausführungsform auch der Zulauf der Ableitung und/oder der Zulauf der Kühlleitung mit dem weiteren Hydraulikfluidbehälter fluidverbunden.

Daraus folgt das Hydraulikfluid, welcher zur Kühlung verwendet wird in den weiteren Hydraulikfluidbehälter strömt. Dies ist vorteilhaft, da somit das ggf. hocherhitze Hydraulikfluid, welches zur Kühlung verwendet worden ist, in dem zweiten Hydraulikfluidbehälter "auskühlen" kann, wobei die Kühlung verbessert wird, wenn der weitere Hydraulikfluidbehälter ein offener Tank ist.

Gemäß einer weiteren erfindungsgemäßen Ausführungsform ist ein Kühler in dem Niederdruckbereich und/oder in/an dem Zulauf oder in/an der Ableitung oder in/an der Kühlleitung, oder in/an einem der Hydraulikfluidbehälter angeordnet.

Durch den Kühler kann das erhitze Hydraulikfluid schneller gekühlt werden und somit wieder im Hydrauliksystem eingesetzt werden. Außerdem ist somit die Verwendung eines geschlossenen Hydraulikfluidbehälters für den weiteren Hydraulikfluidbehälter, anstatt eines offenem Tank möglich. Dies spart Platz, da üblicherweise offenen Tanks größer sind als Druckspeicher. Ferner wird somit die benötigte Menge an Hydraulikfluid verringert

Ist jedoch der weitere Hydraulikfluidbehälter ein offener Tank, dann hat die Verwendung eines Kühlers den Vorteil, dass der Tank kleiner sein kann.

Weiterhin können auch Filtereinrichtungen und/oder Entlüfter in dem Niederdruckbereich des Hydrauliksystems angeordnet werden.

Entsprechend aller obengenannten Ausführungsformen wird erfindungsgemäß ein Verfahren zur Verwendung des Hydrauliksystems beansprucht, bei dem ein Hydraulikfluid aus der Leckage der Hydromaschine zur Kühlung des Elektromotors verwendet wird.

Die Erfindung wird nachfolgende anhand verschiedener Ausführungsbeispiele erläutert.

Dabei zeigen:
**Fig. 1****:** eine schematische Darstellung eines nicht zur Erfindung gehörenden Systems;
**Fig. 2****:** eine schematische Ausführungsform eines erfindungsgemäßen Systems;
**Fig.3****:** noch eine weitere beispielhafte Ausführungsform des Hydrauliksystems mit parallel angeordneter Ableitung und Kühlleitung
**Fig. 4****:** ein nicht zur Erfindung gehörendes Hydrauliksystem aus Fig. 1 umfassend einen weiteren Hydraulikfluidbehälter;
**Fig. 5****:** eine schematische weitere beispielhafte Ausführungsform des erfindungsgemäßen Systems abgeleitet von Fig. 4;
**Fig. 6****:** eine schematische weitere beispielhafte Ausführungsform des erfindungsgemäßen Systems abgeleitet von Fig. 4
**Fig. 7****:** ein nicht zur Erfindung gehörendes Hydrauliksystem.

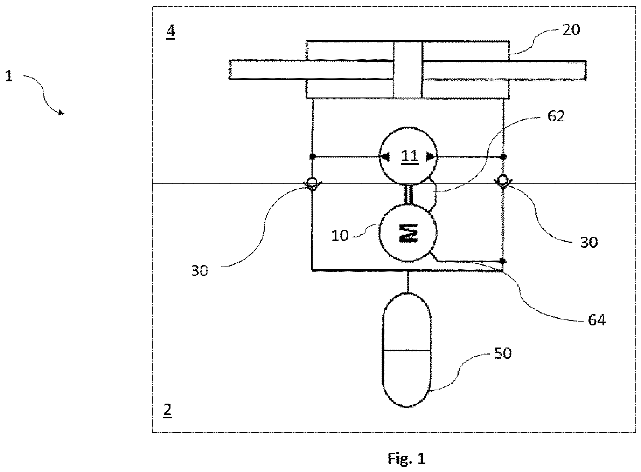

Figur 1 zeigt ein Hydrauliksystem 1. Wie aus der Figur ersichtlich, kann das Hydrauliksystem in zwei Bereichen unterteilet werden, einen Niederdruckbereich 2, in dem das Hydraulikfluid einen niedrigen Druck aufweist, insbesondre einen Druck zwischen dem Umgebungsdruck und 30 bar und einen Hochdruckbereich 4, in dem das Hydraulikfluid einen hohen Druck, insbesondere über 30 bar aufweist, welches zur Bewegung einer in dem Hydrauliksystem angeordneten und mit dem Hochdruckbereich 4 des Hydrauliksystem 1 verbundenen Achse 20 verwendet wird.

Das Hydrauliksystem 1 weist einen ersten Elektromotor 10 und einen vom Elektromotor 10 angetriebene Hydromaschine 11 auf. Diese ist im Hochdruckbereich 4 angeordnet und dient der Bereitstellung eines Volumenstroms des Hydraulikfluid in der Achse 20. Die Achse ist als doppeltwirkender Hydraulikzylinder mit zwei Kammern dargestellt Die Hydromaschine hat zwei Ausgänge bzw. Eingänge, welche jeweils mit einer Kammer der Achse 20 verbunden sind. Somit kann die Hydromaschine Hydraulikfluid von einer Kammer der Achse 20 in die andere Kammer der Achse 20 befördern, wodurch eine Bewegung der Achse 20 bereitgestellt wird. Der Hochdruckbereich 4 und der Niederdruckbereich 2 sind mittels entsperbarre Rückschlagventile 30 voneinander getrennt

Durch den kontinuierlichen Betrieb der Hydromaschine 11, treten an der Hydromaschine 11 Leckagen auf, wodurch das Volumen an Hydraulikfluid in dem Hochdruckbereich 4 sinkt. Durch genaue Einstellung der Federstärke in den Rückschlagventilen 30 oder durch die elektrische Entsperrung kann das fehlende Volumen an Hydraulikfluid aus den Niederdruckbereich 2 in den Hochdruckbereich 4 geleitet werden.

Gemäß Figur 1 ist ein Hydraulikfluidbehälter 50, welcher als Druckspeicher 50 ausgestaltet ist, mit dem Niederdruckbereich 2 des Hydrauliksystems 1 hydraulisch verbunden.

Wie in der Figur 1 gezeigt umfasst das Hydrauliksystem 1 eine Ableitung 62, welche mit der Leckage bzw. dem Auffangbereich der Leckage der Hydromaschine so verbunden ist, dass das Leckagefluid durch die Ableitung wieder in dem Niederdruckbereich eingespeist werden kann.

Diesbezüglich, wurde gemäß diesem Beispiel die Ableitung 62 mit der Kühlleitung 64 des Elektromotors verbunden, so dass das Leckagefluid als Kühlfluid für den Elektromotor 11 verwendet wird. In diesem Beispiel sind also die Ableitung und die Kühlleitung in Reihe angeordnet. Die Kühlleitung 64 ist wiederum mit dem Niederdruckbereich 2 fluidverbunden und insbesondere mit dem Hydraulikfluidbehälter 50 fluidverbunden. Das Leckagefluid wird somit zur Kühlung verwendet und nachträglich in das System wieder eingespeist.

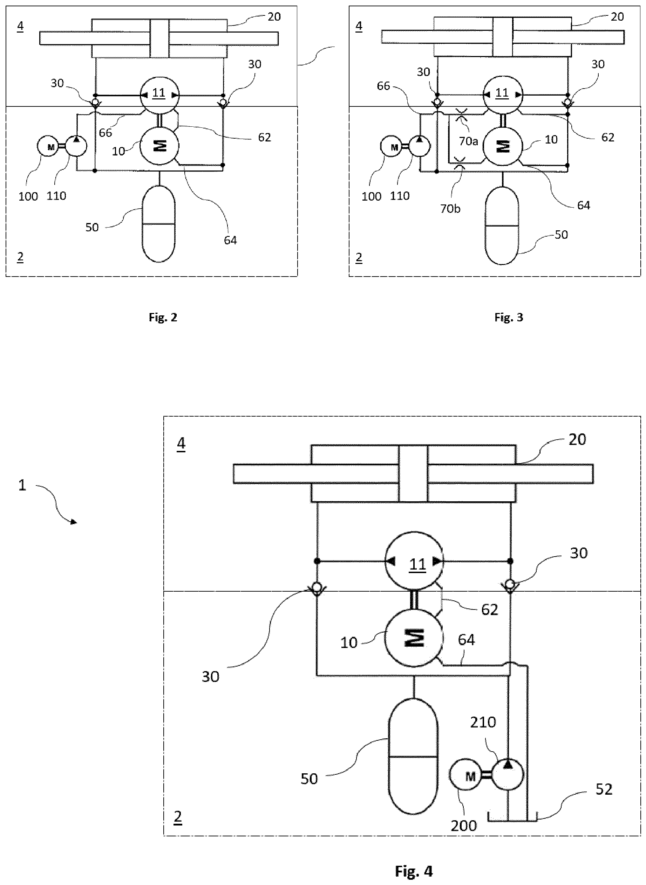

**Figur 2** zeigt eine alternative beispielhafte erfindungsgemäße Ausführungsform eines Hydrauliksystems 1 abgeleitet von Figur 1.

Während der allgemeine Aufbau der Ausführungsform gemäß Figur 2, dem Aufbau der Figur 1 entspricht, umfasst das Hydrauliksystem aus Figur 1 weiterhin einen Zulauf 66, sowie einen zweiten Elektromotor 100 mit einer zweiten, von dem Elektromotor angetrieben Hydromaschine 110.

Der Zulauf 66 ist durch das Gehäuse der Hydromaschine 11 mit dem Leckagebereich verbunden, welcher wie in Figur 1 mit der Ableitung 62 in Reihe hydraulisch verbunden ist.

Der Zulauf 66 ist weiterhin über die zweite Hydromaschine 110 mit dem Niederdruckbereich 2 fluidverbunden. Somit kann mittels der Hydromaschine 110 eine verbesserte Steuerung des Volumenstroms durch die Ableitung und/oder die Kühlleitung erreicht werden.

**Figur 3** zeigt eine weitere, beispielhafte erfindungsgemäße alternative Ausführungsform der Figur 2. Die Ableitung 62 und die Kühlleitung 64 sind in dieser beispielhaften Ausführungsform parallel angeordnet, so dass beide Leitungen mit dem Niederdruckbereich 2 hydraulisch verbunden sind. Der Zulauf 66 hingegen ist über eine Drossel 70b mit der Kühlleitung und somit mit dem Gehäuse des Elektromotors 10 und über eine weitere Drossel 70a mit der Ableitung hydraulisch verbunden. Der Zulauf 66 ist über die Hydromaschine 110 mit dem Niederdruckbereich 2 verbunden. Die Drosseln 70a und 70b dienen somit der Regulierung des Volumenstroms in der Ableitung 62 und/oder Kühlleitung 64.

**Figur 4** zeigt ein weiteres Beispiel des Hydrauliksystems 1 aus Figur 1.

Wie aus der Figur 4 ersichtlich, weist das folgende Beispiel einen weiteren Hydraulikfluidbehälter 52 auf, welcher im Gegensatz zu dem ersten Hydraulikfluidbehälter 50, ein offener Tank ist Der offene Tank 52 ist auch mit dem Niederdruckbereich 2 fluidverbunden.

Gemäß diesem Beispiel sind die Kühlleitung 64 und die Ableitung 62 in Reihe miteinander verbunden. Weiterhin sind sie mit dem Hydraulikfluidbehälter 52 fluidverbunden, so dass Hydraulikfluid aus dem Leckagebereich der Hydromaschine 11, durch die Kühlleitung des Elektromotors 10 und anschließend in den Hydraulikfluidbehälter 52 strömt

Weiterhin ist zwischen dem Hydraulikfluidbehälter 50 und dem Niederdruckbereich 2 eine weitere, von einem Elektromotor 200 angetriebene Hydromaschine 220 angeordnet. Die Hydromaschine stellt einen Fluidstrom aus dem weiteren Hydraulikfluidbehälter 52 in den Niederdruckbereich 2 bereit

Der weitere Aufbau des Beispiels aus Fig. 4 und insbesondere der Aufbau des Hochdruckbereichs entspricht dem Beispiel des Hydrauliksystems 1 aus Figur 1.

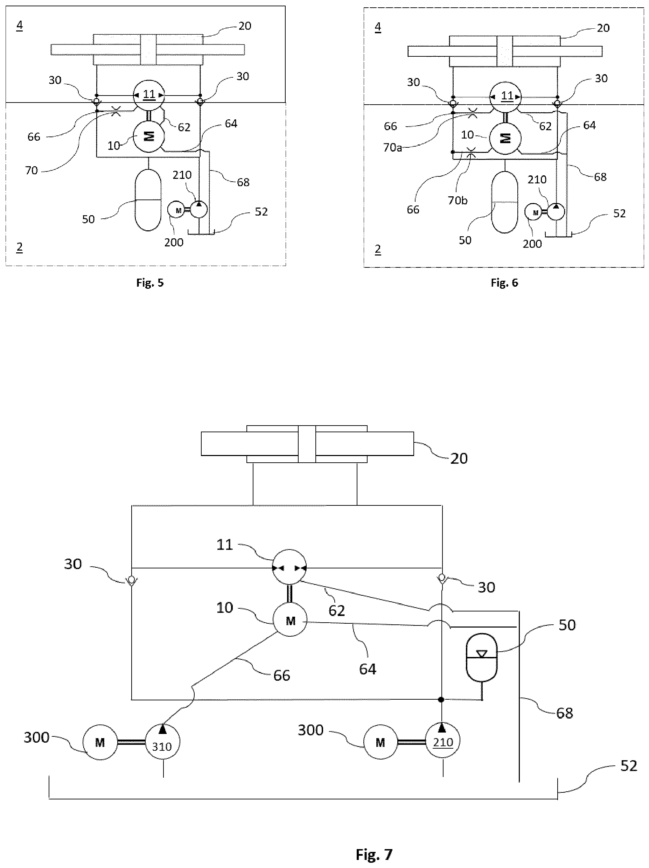

**Figur 5** zeigt noch eine weitere beispielhafte erfindungsgemäße Ausführungsform des Hydrauliksystems 1.

Wie aus der Figur zu erkennen ist, ist auch hier ein zweiter Hydraulikfluidbehälter 52 über eine weitere Hydromaschine 210 mit dem Niederdruckbereich des Hydrauliksystems fluidverbunden. Weiterhin ist die Ableitung 62 und die Kühlleitung 64 in Reihe und mit dem Hydraulikfluidbehälter 52 fluidverbunden.

Im Gegensatz zu Figur 4 ist in diesem System der Figur 5 ein Zulauf 66 mit der Ableitung 62 der Hydromaschine 11 verbunden. Dieser Zulauf ist weiterhin mit dem Niederdruckbereich 2 des Hydrauliksystems 1 hydraulisch verbunden. Eine Drossel 70 ist in dem Zulauf angeordnet und regelt bzw. steuert den Durchfluss des Hydraulikfluids in die Ableitung 52.

**Figur 6** ähnelt der **Figur 5****,** wobei in dieser beispielhaften erfindungsgemäßen Ausführungsform die Ableitung und die Kühlleitung parallel mit einer Leitung 68 fluidverbunden sind, welche selbst mit dem zweiten Hydraulikfluidbehälter 52 hydraulisch verbunden ist.

Weiterhin ist der Zulauf 66 über eine Drossel 70a mit der Ableitung 62 und über eine zweite Drossel 70b mit der Kühlleitung 64 fluidverbunden. Weiterhin ist der Zulauf mit dem Niederdruckbereich 2 des Hydrauliksystems 1 fluidverbunden.

**Figur 7** zeigt ein weiteres Beispiel des Hydrauliksystems 1.

Wie auch schon in den vorherigen Ausführungsformen dargestellt, ist ein weiteres Hydraulikfluidbehälter 52, welcher offen gestaltet ist, in den Niederdruckbereich 2 des Hydraulikkreislaufes 1 über eine Hydromaschine 210 angeordnet.

Die Ableitung 62 und die Kühlleitung 62 sind in Reihe angeordnet und sind über eine Leitung 68 mit dem Hydraulikfluidbehälter 52 fluidverbunden. Ein Zulauf 66 ist dabei an einer Seite mit der Kühlleitung 64 und an der anderen Seite über eine weitere Hydromaschine 310, welche von einem weiteren dritten Elektromotor 300 angetrieben wird, mit dem Hydraulikfluidbehälter 52 fluidverbunden. Somit wird das zur Kühlung nötige Hydraulikfluid weiter aus dem Niederdruckbereich 2 erhalten.

| | |
|---|---|
| 1 Hydrauliksystem | 62 Ableitung |
| 2 Niederdruckbereich | 64 Kühlleitung |
| 4 Hochdruckbereich | 66, 66a, 66b Zulauf |
| 10 erster Elektromotor | 68 Leitung |
| 11 Hydromaschine | 70, 70a, 70b Drossel |
| 20 Achse | 100 zweiter Elektromotor |
| 30 Rückschlagventil | 110 zweite Hydromaschine |
| 50 erster Hydraulikfluidbehälter | 200 Elektromotor |
| 52 zweiter Hydraulikfluidbehälter | 210 Hydromaschine |

## Patentansprüche

1. Hydrauliksystem (1), umfassend:
einen Hydraulikkreislauf, wobei der Hydraulikkreislauf einen Niederdruckbereich (2) und einen Hochdruckbereich (4) aufweist;
eine von einem ersten Elektromotor (10) angetriebene volumen- und/oder drehzahl-variable Hydromaschine (11) aufweisend einen Einlass und einen Auslass zum Bereitstellen eines Volumenstromes eines Hydraulikfluides im Hochdruckbereich (4) des Hydraulikkreislaufs und ferner aufweisend einen weiteren Anschluss an dem Gehäuse der Hydromaschine (11) zur Verbindung mit einem Zulauf (66);
mindestens eine bewegbare Achse (20), wobei die Achse (20) an den Hochdruckbereich (4) des Hydraulikkreislaufs angeordnet ist;
mindestens ein Ventil (30), welches den Hochdruckbereich (4) von den Niederdruckbereich (2) trennt;
mindestens einen Hydraulikfluidbehälter (50, 52), welcher mit dem Niederdruckbereich (2) des Hydraulikkreislaufs hydraulisch verbunden ist;
eine Ableitung (62), welche Hydraulikfluid aus der Leckage der Hydromaschine (11), von der Hydromaschine (11) abführt;
eine Kühlleitung (64), zum Transport des Hydraulikfluid zur Kühlung des Elektromotors (10);
die Ableitung (62) und die Kühlleitung (64), mit mindestens einem der Hydraulikfluidbehälter (50, 52) fluidverbunden sind wobei die Hydromaschine (11) durch den weiteren Anschluss über den Zulauf (66) mit dem Hydraulikkreislauf im Niederdruckbereich (2) hydraulisch verbunden ist, und
wobei der Zulauf (66) über den weiteren Anschluss an dem Gehäuse der Hydromaschine (11) mit dem Leckagebereich der Hydromaschine (11) verbunden ist, wobei der Leckagebereich mit der Ableitung (62) in Reihe hydraulisch verbunden ist.

2. Hydrauliksystem (1) nach Anspruch 1, **dadurch gekennzeichnet, dass** die Ableitung (62) und die Kühlleitung (64) in Reihe oder parallel mit mindestens einem der Hydraulikfluidbehälter (50, 52) fluidverbunden sind.

3. Hydrauliksystem (1) nach einem der vorherigen Ansprüche, **dadurch gekennzeichnet, dass** die Ventile (30) Rückschlagventile, insbesondere gesteuerte Rückschlagventile sind.

4. Hydrauliksystem (1) nach Anspruch 1, **dadurch gekennzeichnet, dass** die Kühlleitung (64) auch mit dem Zulauf (66) mit dem Hydraulikkreislauf im Niederdruckbereich (2) hydraulisch verbunden ist.

5. Hydrauliksystem (1) nach Anspruch 1 und/oder Anspruch 4 **dadurch gekennzeichnet, dass** an dem Zulauf (66) der Ableitung (62) und/oder der Kühlleitung (64) eine zweite von einem Elektromotor (100) angetriebene volumen- und/oder drehzahl-variablen Hydromaschine (110) angeordnet ist.

6. Hydrauliksystem (1) nach einem der vorherigen Ansprüche 4 oder 5, **dadurch gekennzeichnet, dass** an dem Zulauf (66) der Ableitung (62) und/oder der Kühlleitung (64) eine Drossel (70) angeordnet ist.

7. Hydrauliksystem (1) nach einem der vorherigen Ansprüche, **dadurch gekennzeichnet, dass** der mindestens eine Hydraulikfluidbehälter (50) in dem Niederdruckbereich (2) angeordnet ist,

8. Hydrauliksystem (1) nach Anspruch 7, **dadurch gekennzeichnet, dass** der mindestens eine Hydraulikfluidbehälter (50) ein geschlossener Behälter, insbesondere ein Druckspeicher, ist.

9. Hydrauliksystem (1) nach einem der Ansprüche 7 und 8, **dadurch gekennzeichnet, dass** ein weiterer Hydraulikfluidbehälter (52) in dem Niederdruckbereich (2) angeordnet ist.

10. Hydrauliksystem (1) nach Anspruch 9, **dadurch gekennzeichnet, dass** der erste Hydraulikfluidbehälter (50) ein geschlossener Behälter, insbesondere ein Druckspeicher ist und der weitere Hydraulikfluidbehälter (52) ein druckloser, insbesondere offener, Behälter ist.

11. Hydrauliksystem (1) nach Anspruch 9, **dadurch gekennzeichnet, dass** zwischen den Niederdruckbereich (2) des Hydraulikkreislaufes und den weiteren Hydraulikfluidbehälter (52), eine weitere Hydromaschine (210) angeordnet ist.

12. Hydrauliksystem (1) nach einem der Ansprüche 9 bis 11, **dadurch gekennzeichnet, dass** die Ableitung (62) und die Kühlleitung (64), mit dem zweiten Hydraulikfluidbehälter (52) fluidverbunden sind.

13. Hydrauliksystem (1) nach einem der Ansprüche 9 bis 12, **dadurch gekennzeichnet, dass** der Zulauf (66) der Ableitung (62) und/oder der Kühlleitung (64) mit dem weiteren Hydraulikfluidbehältern (52) fluidverbunden ist.

14. Hydrauliksystem (1) nach einem der vorherigen Ansprüche, **dadurch gekennzeichnet, dass** ein Kühler in dem Niederdruckbereich (2) oder an dem Zulauf (66) oder an der Ableitung oder an der Kühlleitung, oder an einem der Hydraulikfluidbehälter angeordnet ist.

15. Verfahren zurVerwendung des Hydrauliksystems (1) nach einem der vorherigen Ansprüche, **dadurch gekennzeichnet, dass** das ein Hydraulikfluid aus der Leckage der Hydromaschine (11) zur Kühlung des Elektromotors (10) verwendet wird.

## Claims

1. Hydraulic system (1), comprising:
a hydraulic circuit, wherein the hydraulic circuit has a low-pressure region (2) and a high-pressure region (4);
a volume-variable and/or speed-variable hydraulic machine (11) driven by a first electric motor (10), said machine having an inlet and an outlet for providing a volume flow of a hydraulic fluid in the high-pressure region (4) of the hydraulic circuit, and further having an additional port on the housing of the hydraulic machine (11) for connection to a supply line (66);
at least one movable shaft (20), wherein the shaft (20) is arranged in the high-pressure region (4) of the hydraulic circuit;
at least one valve (30) which separates the high-pressure region (4) from the low-pressure region (2);
at least one hydraulic fluid container (50, 52) which is hydraulically connected to the low-pressure region (2) of the hydraulic circuit;
a discharge line (62) which discharges, from the hydraulic machine (11), hydraulic fluid from leakage of the hydraulic machine (11);
a cooling line (64) for transporting the hydraulic fluid for cooling the electric motor (10);
the discharge line (62) and the cooling line (64) are fluidically connected to at least one of the hydraulic fluid containers (50, 52), wherein the hydraulic machine (11) is hydraulically connected to the hydraulic circuit in the low-pressure region (2) by the additional port via the supply line (66), and wherein the supply line (66) is connected to the leakage region of the hydraulic machine (11) via the additional port on the housing of the hydraulic machine (11), wherein the leakage region is hydraulically connected in series with the discharge line (62).

2. Hydraulic system (1) according to claim 1, **characterized in that** the discharge line (62) and the cooling line (64) are fluidically connected in series or in parallel with at least one of the hydraulic fluid containers (50, 52).

3. Hydraulic system (1) according to either of the preceding claims, **characterized in that** the valves (30) are check valves, in particular controlled check valves.

4. Hydraulic system (1) according to claim 1, **characterized in that** the cooling line (64), together with the supply line (66), is hydraulically connected to the hydraulic circuit in the low-pressure region (2).

5. Hydraulic system (1) according to claim 1 and/or claim 4 **characterized in that** a second volume-variable and/or speed-variable hydraulic machine (110) driven by an electric motor (100) is arranged on the supply line (66) of the discharge line (62) and/or of the cooling line (64).

6. Hydraulic system (1) according to either of the preceding claims 4 or 5, **characterized in that** a restrictor (70) is arranged on the supply line (66) of the discharge line (62) and/or of the cooling line (64).

7. Hydraulic system (1) according to any of the preceding claims, **characterized in that** the at least one hydraulic fluid container (50) is arranged in the low-pressure region (2).

8. Hydraulic system (1) according to claim 7, **characterized in that** the at least one hydraulic fluid container (50) is a closed container, in particular a pressure accumulator.

9. Hydraulic system (1) according to either of claims 7 and 8,
**characterized in that** an additional hydraulic fluid container (52) is arranged in the low-pressure region (2).

10. Hydraulic system (1) according to claim 9, **characterized in that** the first hydraulic fluid container (50) is a closed container, in particular a pressure accumulator, and the additional hydraulic fluid container (52) is a non-pressurized, in particular open, container.

11. Hydraulic system (1) according to claim 9, **characterized in that** an additional hydraulic machine (210) is arranged between the low-pressure region (2) of the hydraulic circuit and the additional hydraulic fluid container (52).

12. Hydraulic system (1) according to any of claims 9 to 11,
**characterized in that** the discharge line (62) and the cooling line (64) are fluidically connected to the second hydraulic fluid container (52).

13. Hydraulic system (1) according to any of claims 9 to 12,
**characterized in that** the supply line (66) of the discharge line (62) and/or of the cooling line (64) is fluidically connected to the additional hydraulic fluid container (52).

14. Hydraulic system (1) according to any of the preceding claims,
**characterized in that** a cooler is arranged in the low-pressure region (2) or on the supply line (66) or on the discharge line or on the cooling line, or on one of the hydraulic fluid containers.

15. Method for using the hydraulic system (1) according to any of the preceding claims, **characterized in that** a hydraulic fluid from leakage of the hydraulic machine (11) is used to cool the electric motor (10).

## Revendications

1. Système hydraulique (1), comprenant :
un circuit hydraulique, le circuit hydraulique présentant une zone basse pression (2) et une zone haute pression (4) ;
une machine hydraulique (11) à volume et/ou vitesse de rotation variables, entraînée par un premier moteur électrique (10) et présentant une entrée et une sortie pour la fourniture d'un flux volumique d'un fluide hydraulique dans la zone haute pression (4) du circuit hydraulique et présentant en outre un autre raccord au niveau du boîtier de la machine hydraulique (11) pour la liaison avec une arrivée (66) ;
au moins un axe (20) pouvant être déplacé, l'axe (20) étant disposé au niveau de la zone haute pression (4) du circuit hydraulique ;
au moins une soupape (30) qui sépare la zone haute pression (4) de la zone basse pression (2) ;
au moins un récipient de fluide hydraulique (50, 52) qui est relié de manière hydraulique à la zone basse pression (2) du circuit hydraulique ;
une conduite d'évacuation (62) qui évacue du fluide hydraulique, provenant d'une fuite de la machine hydraulique (11), de la machine hydraulique (11) ;
une conduite de refroidissement (64) permettant le transport du fluide hydraulique pour le refroidissement du moteur électrique (10) ;
la conduite d'évacuation (62) et la conduite de refroidissement (64) étant reliées de manière fluidique à au moins l'un des récipients de fluide hydraulique (50, 52), la machine hydraulique (11) étant reliée de manière hydraulique au circuit hydraulique dans la zone basse pression (2) par l'autre raccord par l'intermédiaire de l'arrivée (66), et l'arrivée (66) étant reliée à la zone de fuite de la machine hydraulique (11) par l'intermédiaire de l'autre raccord au niveau du boîtier de la machine hydraulique (11), la zone de fuite étant reliée de manière hydraulique en série à la conduite d'évacuation (62).

2. Système hydraulique (1) selon la revendication 1, **caractérisé en ce que** la conduite d'évacuation (62) et la conduite de refroidissement (64) sont reliées de manière fluidique en série ou en parallèle à au moins l'un des récipients de fluide hydraulique (50, 52).

3. Système hydraulique (1) selon l'une quelconque des revendications précédentes, **caractérisé en ce que** les soupapes (30) sont des soupapes anti-retour, en particulier des soupapes anti-retour commandées.

4. Système hydraulique (1) selon la revendication 1, **caractérisé en ce que** la conduite de refroidissement (64) est également reliée de manière hydraulique au circuit hydraulique dans la zone basse pression (2) par l'arrivée (66).

5. Système hydraulique (1) selon la revendication 1 et/ou la revendication 4, **caractérisé en ce qu'**une seconde machine hydraulique (110) à volume et/ou vitesse de rotation variables et entraînée par un moteur électrique (100) est disposée au niveau de l'arrivée (66) de la conduite d'évacuation (62) et/ou de la conduite de refroidissement (64).

6. Système hydraulique (1) selon l'une des revendications 4 ou 5 précédentes, **caractérisé en ce qu'**un étranglement (70) est disposé au niveau de l'arrivée (66) de la conduite d'évacuation (62) et/ou de la conduite de refroidissement (64).

7. Système hydraulique (1) selon l'une quelconque des revendications précédentes, **caractérisé en ce que** l'au moins un récipient de fluide hydraulique (50) est disposé dans la zone basse pression (2).

8. Système hydraulique (1) selon la revendication 7, **caractérisé en ce que** l'au moins un récipient de fluide hydraulique (50) est un récipient fermé, en particulier un accumulateur de pression.

9. Système hydraulique (1) selon l'une des revendications 7 et 8, **caractérisé en ce qu'**un autre récipient de fluide hydraulique (52) est disposé dans la zone basse pression (2).

10. Système hydraulique (1) selon la revendication 9, **caractérisé en ce que** le premier récipient de fluide hydraulique (50) est un récipient fermé, en particulier un accumulateur de pression, et l'autre récipient de fluide hydraulique (52) est un récipient sans pression, en particulier ouvert.

11. Système hydraulique (1) selon la revendication 9,
**caractérisé en ce qu'**une autre machine hydraulique (210) est disposée entre la zone basse pression (2) du circuit hydraulique et l'autre récipient de fluide hydraulique (52).

12. Système hydraulique (1) selon l'une des revendications 9 à 11,
**caractérisé en ce que** la conduite d'évacuation (62) et la conduite de refroidissement (64) sont reliées de manière fluidique au second récipient de fluide hydraulique (52).

13. Système hydraulique (1) selon l'une des revendications 9 à 12,
**caractérisé en ce que** l'arrivée (66) de la conduite d'évacuation (62) et/ou de la conduite de refroidissement (64) est reliée de manière fluidique aux autres récipients de fluide hydraulique (52).

14. Système hydraulique (1) selon l'une quelconque des revendications précédentes, **caractérisé en ce qu'**un refroidisseur est disposé dans la zone basse pression (2) ou au niveau de l'arrivée (66) ou au niveau de la conduite d'évacuation ou au niveau de la conduite de refroidissement ou au niveau de l'un des récipients de fluide hydraulique.

15. Procédé d'utilisation du système hydraulique (1) selon l'une quelconque des revendications précédentes, **caractérisé en ce que** le un fluide hydraulique provenant de la fuite de la machine hydraulique (11) est utilisé pour le refroidissement du moteur électrique (10).
